# EUROPEAN PATENT APPLICATION

(11) **EP 4 610 816 A1**
(43) Date of publication of application: **03.09.2025**
(21) Application number: 23882668.9
(22) Date of filing: 25.10.2023
(51) Int. Cl.: G06F 8/75, G06F 8/10

(54) **SOFTWARE CONFIGURATION MANAGEMENT DATA STRUCTURE, SOFTWARE CONFIGURATION MANAGEMENT DATA CREATION ASSISTANCE DEVICE, AND SOFTWARE CONFIGURATION MANAGEMENT DATA CREATION ASSISTANCE METHOD**

(30) Priority: 28.10.2022 JP 2022173181
(71) Applicant: Hitachi, Ltd., Tokyo 100-8280 (JP)
(72) Inventor: SHIMODA, Mutsumi, Tokyo 100-8280 (JP); YAMAZAKI, Hiroki, Tokyo 100-8280 (JP); HASHIMOTO, Yoko, Tokyo 100-8280 (JP); KASUYA, Momoka, Tokyo 100-8280 (JP)
(74) Representative: Mewburn Ellis LLP
(86) International application number: PCT/JP2023/038458
(87) International publication number: WO 2024/090463

(57) **Abstract**

A software configuration management data creation support apparatus is an apparatus that supports creation of software configuration management data for managing a software configuration of an information system including a plurality of information devices, and includes: a design information collection unit that collects design information of the information system; a design information extraction unit that extracts a predetermined word/phrase from the design information; a class candidate selection unit that compares the word/phrase extracted by the design information extraction unit with attribute information set in advance according to a functional configuration of the information system, and selects, on the basis of a result of the comparison, a class candidate corresponding to a concrete class or an abstract class in a case where functional configurations taken charge of by the information devices in the information system are represented in a tiered structure including a concrete class of a lowest tier and abstract classes of one or a plurality of higher tiers; and a management data creation unit that presents the class candidate to a user and creates the software configuration management data on the basis of the user's operation of selecting the class candidate.

## Description

### [Technical Field]

The present invention relates to a data structure for managing a software configuration related to a configuration of software used in an information system, and an apparatus and a method for supporting creation of data.

### [Background Art]

There is a security defect called a vulnerability in software used in an information system, and if an operation of the information system is continued while leaving the vulnerability, an attack such as unauthorized access may be received from a malicious third party. Thus, at the time of the operation of the information system, it is required to continuously collect vulnerability information regarding vulnerabilities of software and to take countermeasures as necessary.

In the case of an information system configured by combining one or more pieces of software and/or one or more information devices provided from one or more suppliers, it is important for a manufacturer or an operation destination of the information system to reliably ascertain software configurations of all the information devices in the entire information system in order to accurately implement the above countermeasures. Therefore, a technique for reliably managing a software configuration of each information device included in an information system is required in a manufacturing company or an operation destination of the information system.

For example, the technique in PTL 1 is known regarding management of a software configuration in an information system. PTL 1 discloses a component list creation support apparatus that acquires order data defining specifications required for an ordered product, selects, as an approximation unit, a unit having a relatively high degree of approximation to the ordered product from among a plurality of already delivered units, presents approximate component list data representing a component list of the approximation unit to a user as a template of a component list of the ordered product, and provides an editing environment to the user.

### [Citation List]

### [Patent Literature]

[PTL 1] WO 2022/018889

### [Summary of Invention]

### [Technical Problem]

In the technique in PTL 1, it is assumed that the component configuration of the ordered product is known and a difference in the component configuration between the already delivered unit and the ordered product can be reliably ascertained. However, in the case of an information system including a large number of information devices, it is not always possible to acquire configuration information of software of each information device in the information system, and thus it is difficult to apply the technique in PTL 1.

The present invention has been made on the basis of such a background, and an object of the present invention is to provide a technique for reliably managing a software configuration of an information system configured by combining one or more pieces of software and/or one or more information devices.

### [Solution to Problem]

A software configuration management data structure according to the present invention is a data structure for managing a software configuration of an information system including a plurality of information devices, and includes class relationship data in which functional configurations taken charge of by the respective information devices in the information system are represented in a tiered structure including a concrete class of a lowest tier and abstract classes of one or a plurality of higher tiers.

A software configuration management data creation support apparatus according to the present invention is an apparatus that supports creation of software configuration management data for managing a software configuration of an information system including a plurality of information devices, and includes: a design information collection unit that collects design information of the information system; a design information extraction unit that extracts a predetermined word/phrase from the design information; a class candidate selection unit that compares the word/phrase extracted by the design information extraction unit with attribute information set in advance according to a functional configuration of the information system, and selects, on the basis of a result of the comparison, a class candidate corresponding to a concrete class or an abstract class in a case where functional configurations taken charge of by the information devices in the information system are represented in a tiered structure including a concrete class of a lowest tier and abstract classes of one or a plurality of higher tiers; and a management data creation unit that presents the class candidate to a user and creates the software configuration management data on the basis of the user's operation of selecting the class candidate.

A software configuration management data creation support method according to the present invention is a method of supporting creation of software configuration management data for managing a software configuration of an information system including a plurality of information devices, and includes: collecting design information of the information system; extracting a predetermined word/phrase from the collected design information; comparing the extracted word/phrase with attribute information set in advance according to a functional configuration of the information system; selecting, on the basis of a result of the comparison, a class candidate corresponding to a concrete class or an abstract class in a case where functional configurations taken charge of by the information devices in the information system are represented in a tiered structure including a concrete class of a lowest tier and abstract classes of one or a plurality of higher tiers; presenting the selected class candidate to a user; and creating the software configuration management data on the basis of the user's operation of selecting the presented class candidate.

### [Advantageous Effects of Invention]

According to the present invention, it is possible to provide a technique for reliably managing a software configuration of an information system configured by combining one or more pieces of software and/or one or more information devices.

### [Brief Description of Drawings]

[Fig. 1]

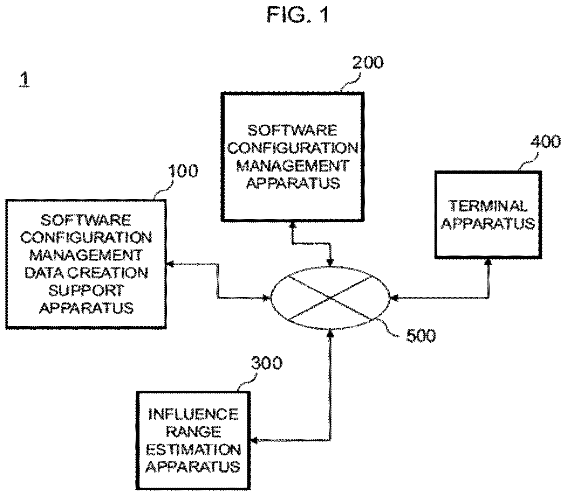

   Fig. 1 is a block diagram illustrating a functional configuration of a software configuration management system according to an embodiment of the present invention.
[Fig. 2]

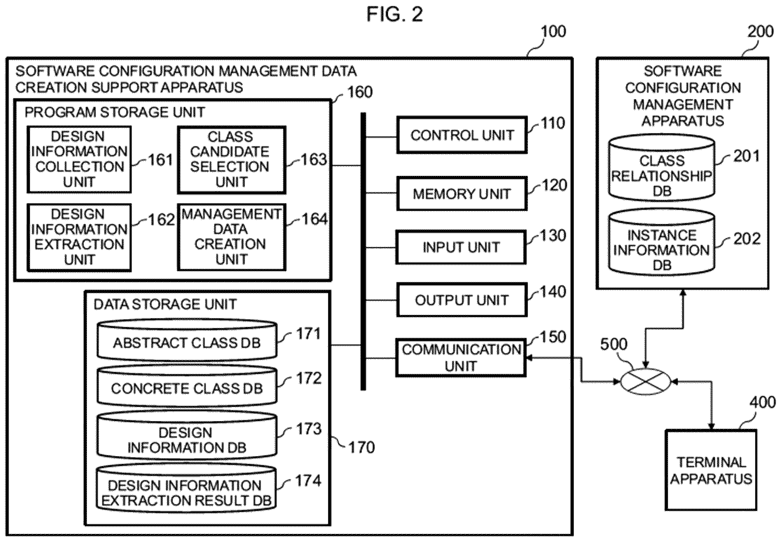

   Fig. 2 is a functional block diagram of a software configuration management data creation support apparatus and a software configuration management apparatus.
[Fig. 3]

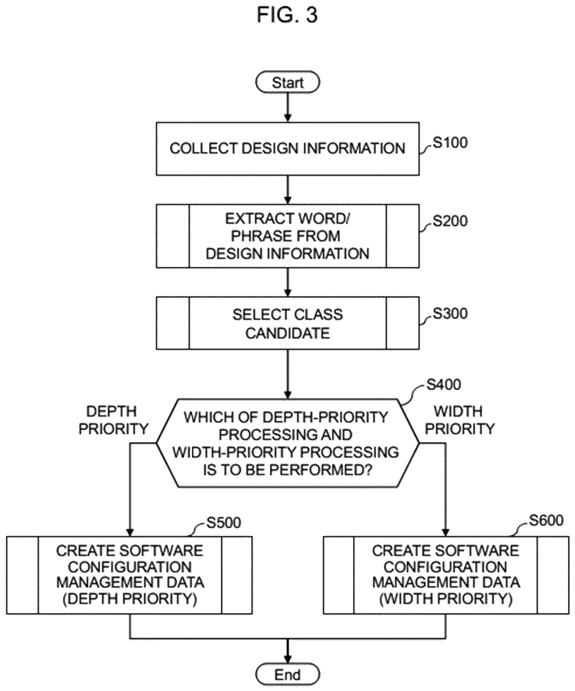

   Fig. 3 is a flowchart illustrating a flow of software configuration management data creation support processing.
[Fig. 4]

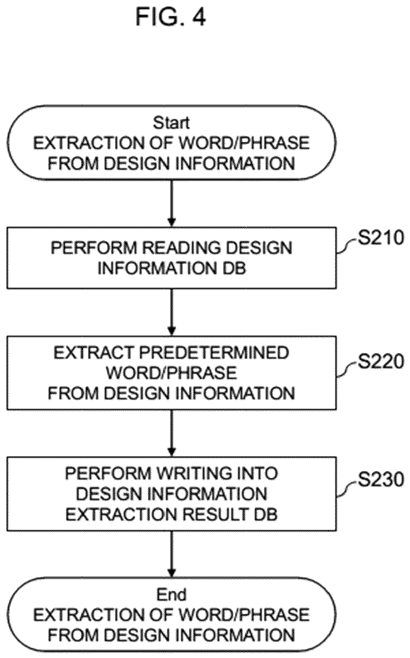

   Fig. 4 is a flowchart illustrating a flow of word/phrase extraction processing from design information.
[Fig. 5]

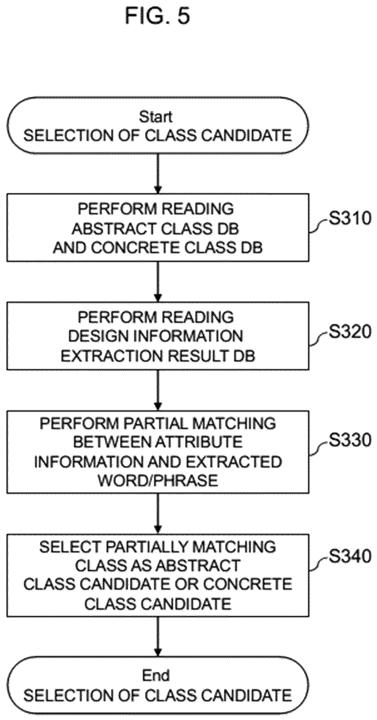

   Fig. 5 is a flowchart illustrating a flow of class candidate selection processing.
[Fig. 6]

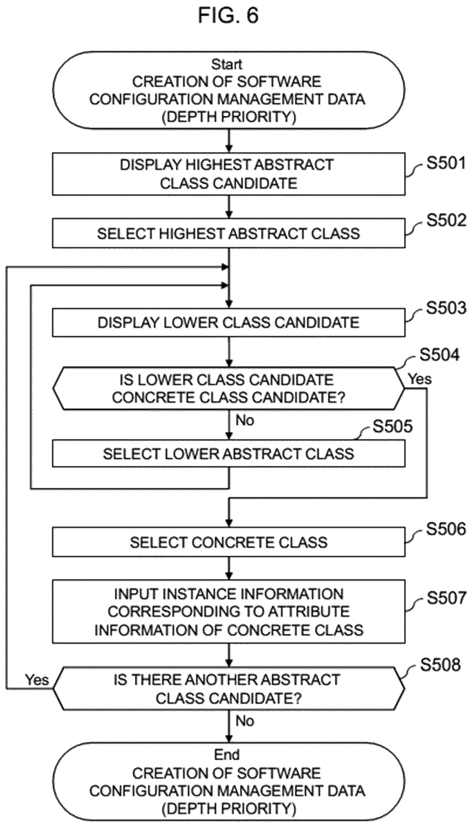

   Fig. 6 is a flowchart illustrating a flow of software configuration management data creation processing based on depth priority.
[Fig. 7]

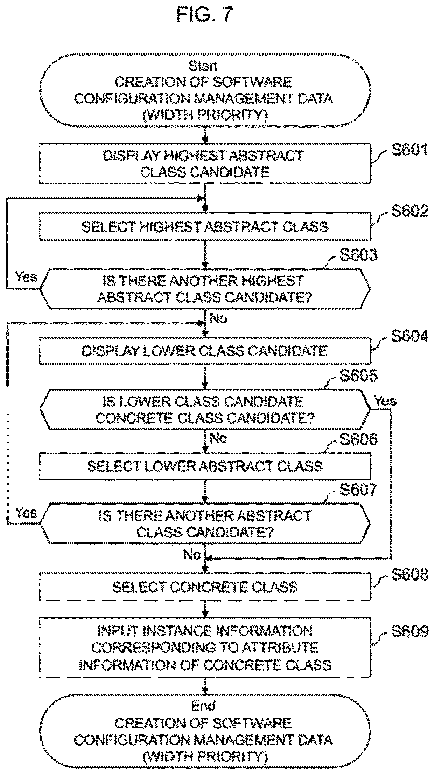

   Fig. 7 is a flowchart illustrating a flow of software configuration management data creation processing based on width priority.
[Fig. 8]

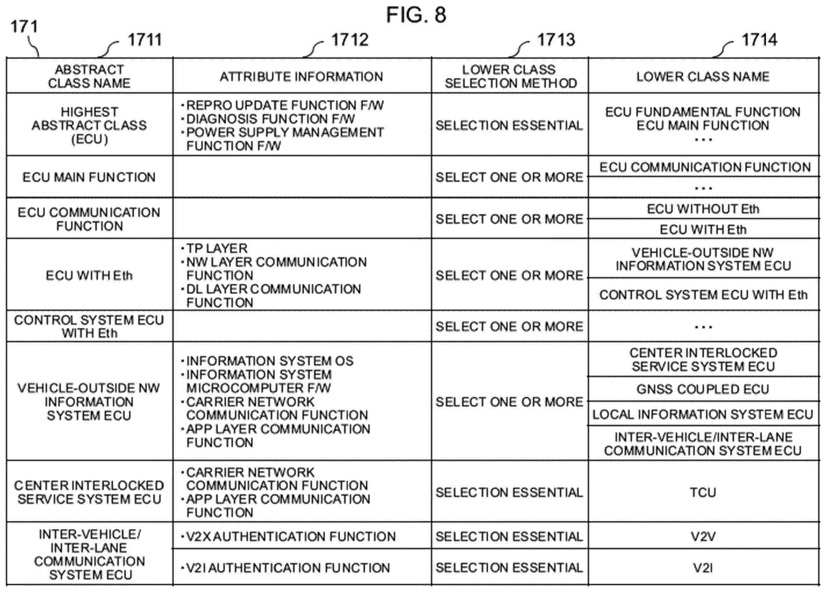

   Fig. 8 is a diagram illustrating an example of an abstract class database.
[Fig. 9]

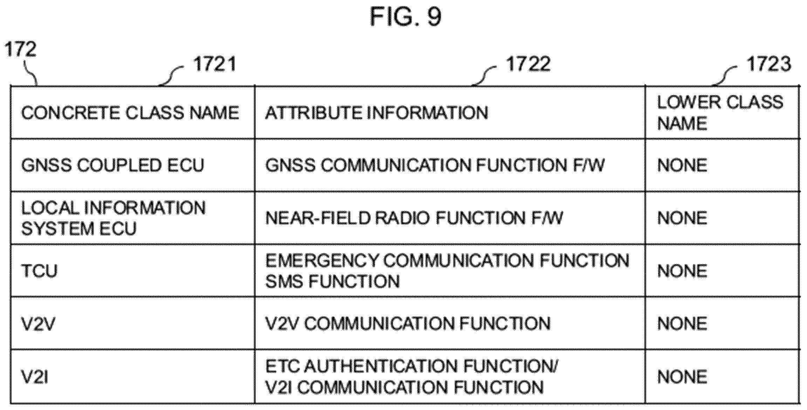

   Fig. 9 is a diagram illustrating an example of a concrete class database.
[Fig. 10]

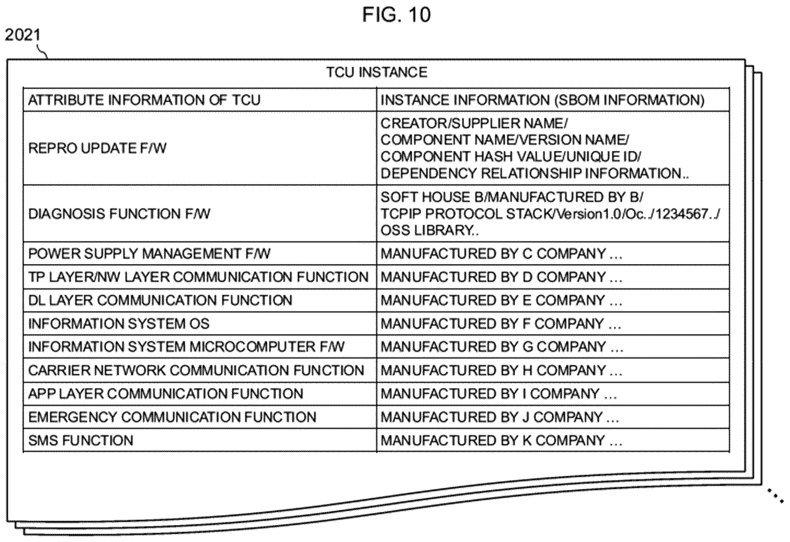

   Fig. 10 is a diagram illustrating an example of data of instance information.
[Fig. 11]

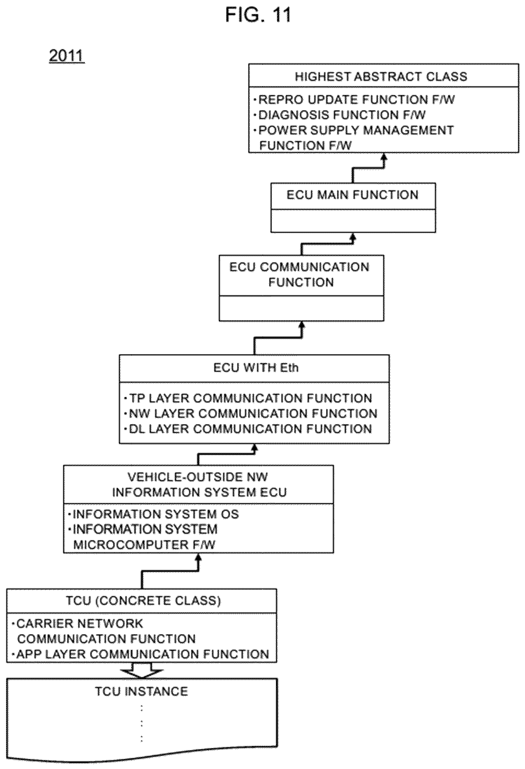

   Fig. 11 is a diagram illustrating an example of class relationship data.
[Fig. 12]

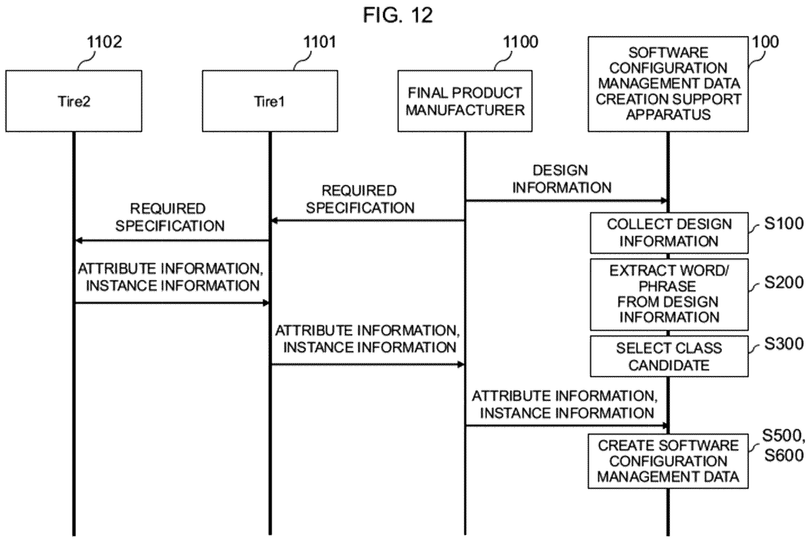

   Fig. 12 is a sequence diagram illustrating a flow of processing at the time of creating software configuration management data.
[Fig. 13]

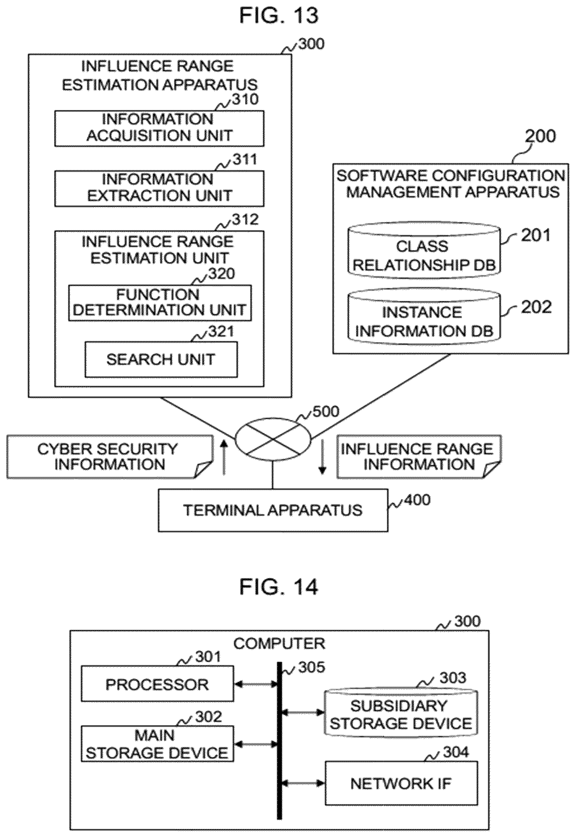

   Fig. 13 is a functional block diagram of an influence range estimation apparatus.
[Fig. 14]
   Fig. 14 is a diagram illustrating a configuration example of a computer configuring the influence range estimation apparatus.
[Fig. 15]

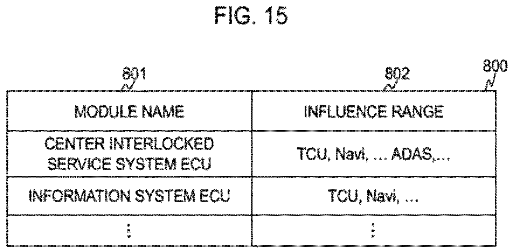

   Fig. 15 is a diagram illustrating an example of influence range information.
[Fig. 16A]

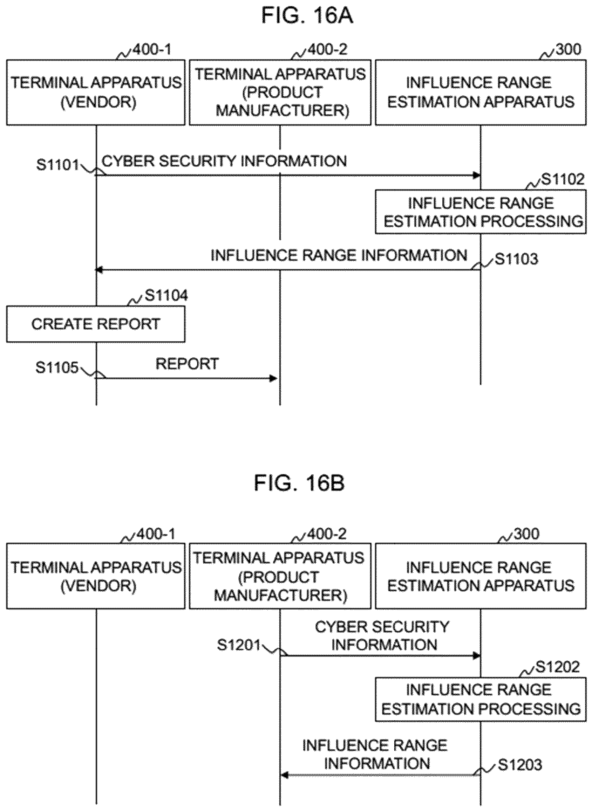

   Fig. 16A is a sequence diagram for describing an example of a flow of processing of the influence range estimation apparatus.
[Fig. 16B]
   Fig. 16B is a sequence diagram for describing an example of a flow of processing of the influence range estimation apparatus.
[Fig. 17]

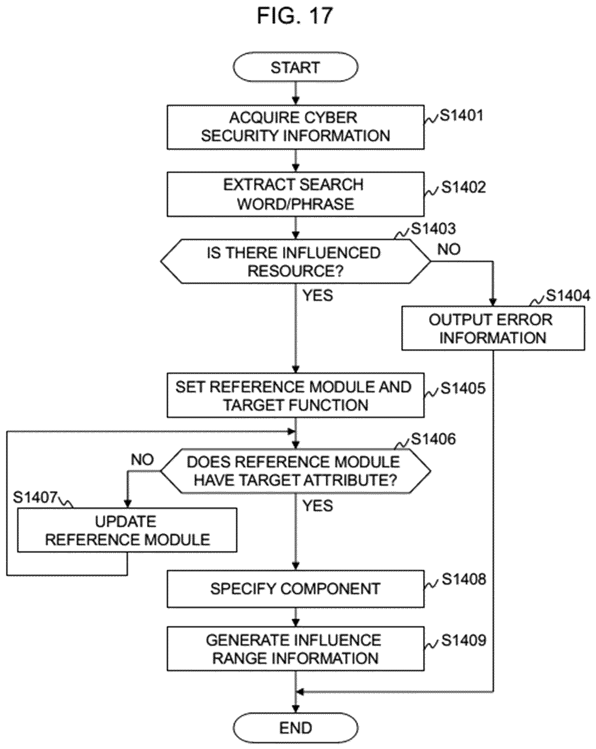

   Fig. 17 is a flowchart for describing an example of influence range estimation processing.
[Fig. 18]

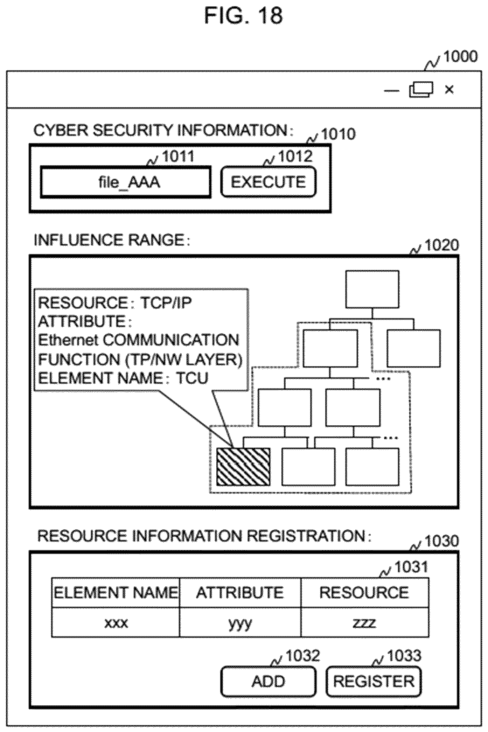

   Fig. 18 is a diagram illustrating an example of a screen displayed on the basis of influence range information.

### [Description of Embodiments]

Hereinafter, an embodiment of the present invention will be described with reference to the drawings.

Fig. 1 is a block diagram illustrating a functional configuration of a software configuration management system according to an embodiment of the present invention. A software configuration management system 1 illustrated in Fig. 1 is a system for managing a software configuration of an information system such as an automobile, configured by combining one or more pieces of software and/or one or more information devices, and is configured by coupling a software configuration management data creation support apparatus 100, a software configuration management apparatus 200, an influence range estimation apparatus 300, and a terminal apparatus 400 to each other via a network 500.

The software configuration management data creation support apparatus 100 supports creation of software configuration management data used for management of a software configuration of an information system. A user of the software configuration management system 1 can easily create software configuration management data for a target information system with the support of the software configuration management data creation support apparatus 100. The software configuration management data creation support of the software configuration management data creation support apparatus 100 will be described later in detail.

The software configuration management apparatus 200 includes a recording apparatus capable of recording data, and stores and saves software configuration management data created by the user with the support of the software configuration management data creation support apparatus 100 in the recording apparatus. The recording apparatus of the software configuration management apparatus 200 is configured by using, for example, a large-capacity non-transitory magnetic storage device such as a hard disk drive (HDD) or a solid state drive (SSD) or a semiconductor storage device.

The influence range estimation apparatus 300 determines an influence range of the information system with respect to a security risk by using the software configuration management data stored in the software configuration management apparatus 200. Note that a specific method of determining an influence range of the information system in the influence range estimation apparatus 300 will be described later.

The terminal apparatus 400 is an information terminal that operates as a client terminal for the software configuration management data creation support apparatus 100 and the software configuration management apparatus 200, and is configured by using, for example, a personal computer (PC). The user of the software configuration management system 1 can perform desired processing on each of the software configuration management data creation support apparatus 100 and the software configuration management apparatus 200 by operating the terminal apparatus 400 to create software configuration management data or investigate an influence range of the information system with respect to a security risk.

The network 500 is configured by using, for example, a local area network (LAN), a wide area network (WAN), or the Internet, and transmits data transmitted and received between the software configuration management data creation support apparatus 100, the software configuration management apparatus 200, the influence range estimation apparatus 300, and the terminal apparatus 400. Note that a combination of any two or more of the software configuration management data creation support apparatus 100, the software configuration management apparatus 200, the influence range estimation apparatus 300, and the terminal apparatus 400 may be installed at the same place, or may be installed at physically distant places. In addition, these apparatuses may be realized on one computer or may be realized on a virtual computer or a cloud service.

Next, details of the software configuration management data creation support apparatus 100 and the software configuration management apparatus 200 will be described. Fig. 2 is a functional block diagram of the software configuration management data creation support apparatus 100 and the software configuration management apparatus 200.

The software configuration management data creation support apparatus 100 includes a control unit 110, a memory unit 120, an input unit 130, an output unit 140, a communication unit 150, a program storage unit 160, and a data storage unit 170.

The control unit 110 is configured by using, for example, a central processing unit (CPU) or a graphics processing unit (GPU), and functions as a design information collection unit 161, a design information extraction unit 162, a class candidate selection unit 163, and a management data creation unit 164 by executing a program stored in the program storage unit 160. Details of the design information collection unit 161, the design information extraction unit 162, the class candidate selection unit 163, and the management data creation unit 164 will be described later. Note that although the program storage unit 160 includes the design information collection unit 161, the design information extraction unit 162, the class candidate selection unit 163, and the management data creation unit 164 in Fig. 2, programs corresponding thereto are actually stored in the program storage unit 160, and the control unit 110 executes the programs to realize the design information collection unit 161, the design information extraction unit 162, the class candidate selection unit 163, and the management data creation unit 164 in the software configuration management data creation support apparatus 100. In addition, programs and data for causing the control unit 110 to function as the design information collection unit 161, the design information extraction unit 162, the class candidate selection unit 163, and the management data creation unit 164 may be introduced from an external apparatus or a nonvolatile storage medium into the software configuration management data creation support apparatus 100 and used in the software configuration management data creation support apparatus 100.

The memory unit 120 is configured by using, for example, a semiconductor storage device such as a random access memory (RAM), and temporarily stores a program loaded from the program storage unit 160 and executed by the control unit 110 and necessary work data.

The input unit 130 receives an input operation performed by an administrator of the software configuration management data creation support apparatus 100, and outputs the input operation content to the control unit 110. The output unit 140 outputs predetermined information to the administrator of the software configuration management data creation support apparatus 100 under the control of the control unit 110, and provides information necessary for the administrator. The input unit 130 and the output unit 140 are configured by using, for example, a mouse, a keyboard, and a display.

The communication unit 150 operates according to the control of the control unit 110, and performs communication interface processing for transmitting and receiving various types of information between the software configuration management data creation support apparatus 100, the software configuration management apparatus 200, and the terminal apparatus 400. Through the communication interface processing performed by the communication unit 150, the operation content of the user on the terminal apparatus 400 is transmitted to the software configuration management data creation support apparatus 100 via the network 500, and the software configuration management data created through processing of the software configuration management data creation support apparatus 100 is transmitted to the software configuration management apparatus 200 via the network 500.

The program storage unit 160 and the data storage unit 170 are configured by using a storage device such as an HDD or an SSD. The program storage unit 160 stores various programs to be executed by the control unit 110, and the data storage unit 170 stores various types of data used in processing of the control unit 110. Note that the program storage unit 160 and the data storage unit 170 may be realized by using one storage device in common, or may be realized by separate storage devices.

The program storage unit 160 stores programs respectively corresponding to the design information collection unit 161, the design information extraction unit 162, the class candidate selection unit 163, and the management data creation unit 164 described above. The design information collection unit 161 collects design information of an information system that is a creation target of the software configuration management data, and registers the design information in a design information database 173 included in the data storage unit 170. The design information extraction unit 162 extracts a predetermined word/phrase for use in creation of the software configuration management data from the design information registered in the design information database 173, and registers the word/phrase in a design information extraction result database 174 included in the data storage unit 170. The class candidate selection unit 163 compares each word/phrase in the design information extracted by the design information extraction unit 162 and registered in the design information extraction result database 174 with attribute information corresponding to the functional configuration of the information system, recorded in the abstract class database 171 and the concrete class database 172 included in the data storage unit 170, and selects a class candidate to be used for creation of the software configuration management data on the basis of a comparison result. The management data creation unit 164 presents each class candidate selected by the class candidate selection unit 163 to the user by outputting the class candidate to the terminal apparatus 400 by using the communication unit 150, and creates the software configuration management data on the basis of the user's operation of selecting the class candidate.

Note that, in the software configuration management data used in the software configuration management system 1 according to the present embodiment, functional configurations taken charge of by the respective information devices in the information system are represented in a tiered structure. In this tiered structure, the lowest tier (class) is referred to as a concrete class, and each tier (class) excluding the lowest tier is referred to as an abstract class. The software configuration management data having such a tiered structure is an abstract representation of the software configuration in the information system, and is also referred to as an abstract software bill of materials (SBOM).

The data storage unit 170 stores an abstract class database 171, a concrete class database 172, the design information database 173, and the design information extraction result database 174. The abstract class database 171 and the concrete class database 172 are databases that store information of each abstract class and each concrete class in the software configuration management data having the tiered structure as described above. The design information database 173 is a database that stores the design information collected by the design information collection unit 161. The design information extraction result database 174 is a database that stores words/phrases extracted by the design information extraction unit 162 from the design information registered in the design information database 173. Details of these databases will be described later.

The software configuration management apparatus 200 includes a class relationship database 201 and an instance information database 202. These databases are stored in a storage device such as an HDD or an SSD in the software configuration management apparatus 200.

The class relationship database 201 is a database that stores class relationship data representing the functional configurations taken charge of by the respective information devices in the information system in the above-described tiered structure. The instance information database 202 is a database that stores data representing instance information (various types of information such as a creator name, a supplier name, a component name, a version name, a component hash value, a unique ID, and dependent information of software) regarding software included in each information device in the information system. In the software configuration management system 1 of the present embodiment, the software configuration management data (abstract SBOM) of the information system is configured by the data stored in each of the class relationship database 201 and the instance information database 202. Note that, in order to manage the software configuration of the information system, at least the class relationship data is required, and the instance information data may be omitted. That is, the software configuration management apparatus 200 only needs to have at least the class relationship database 201, and need not have the instance information database 202.

Next, software configuration management data creation support processing executed in the software configuration management system 1 will be described.

Fig. 3 is a flowchart illustrating a flow of software configuration management data creation support processing. In the software configuration management system 1 of the present embodiment, the processing illustrated in the flowchart of Fig. 3 is executed by the software configuration management data creation support apparatus 100, for example, when a user performs a predetermined operation by using the terminal apparatus 400.

In step S100, the design information collection unit 161 collects design information for an information system that is a creation target of the software configuration management data. Here, for example, necessary design information may be collected by receiving design information input to the terminal apparatus 400 by the user from the terminal apparatus 400 or acquiring design information from an external server designated by the user. The design information collected in step S100 is registered in the design information database 173.

In step S200, the design information extraction unit 162 extracts a word/phrase from the design information collected in step S100. Here, the design information stored in the design information database 173 is read, and a predetermined word/phrase included in the design information is extracted. The word/phrase extraction result in step S200 is registered in the design information extraction result database 174. Note that details of the processing content of step S200 will be described later with reference to the flowchart of Fig. 4.

In step S300, the class candidate selection unit 163 selects a class candidate based on the word/phrase extracted from the design information in step S200. Here, an extraction result of a word/phrase stored in the design information extraction result database 174 is read, and an abstract class candidate or a concrete class candidate corresponding to the extracted word/phrase is selected by referring to the abstract class database 171 and the concrete class database 172. Note that details of the processing content of step S300 will be described later with reference to the flowchart of Fig. 5.

In step S400, it is determined which one of depth-priority processing and width-priority processing is to be performed when the software configuration management data is created. The depth-priority processing is processing of supporting the user to create the software configuration management data by sequentially presenting the plurality of class candidates selected in step S300 to the user with priority given to the depth of the tiered structure of the software configuration management data. On the other hand, the width-priority processing is processing of supporting the user to create the software configuration management data by sequentially presenting the plurality of class candidates selected in step S300 to the user with priority given to the spread of the tiered structure of the software configuration management data. In a case where it is determined in step S400 that the depth-priority processing is to be performed, the flow proceeds to step S500, and in a case where it is determined that the width-priority processing is to be performed, the flow proceeds to step S600. Note that the determination in step S400 may be performed, for example, by allowing the user to select either one by using the terminal apparatus 400, or may be performed on the basis of preset information. Alternatively, the determination processing in step S400 may be performed according to any method.

In step S500, the management data creation unit 164 creates the software configuration management data based on depth priority. Here, executing the above-described depth-priority processing in the management data creation unit 164 supports the user to create the software configuration management data. The class relationship data representing the functional configurations of the respective information devices in the information system in the tiered structure is created according to an input operation performed by the user by using the terminal apparatus 400 at this time, and the software configuration management data is created by creating the instance information of each information device. Note that details of the processing content of step S500 will be described later with reference to the flowchart of Fig. 6.

In step S600, the management data creation unit 164 creates the software configuration management data based on width priority. Here, executing the above-described width-priority processing in the management data creation unit 164 supports the user to create the software configuration management data. The class relationship data representing the functional configurations of the respective information devices in the information system in the tiered structure is created according to an input operation performed by the user by using the terminal apparatus 400 at this time, and the software configuration management data is created by creating the instance information of each information device. Note that details of the processing content of step S600 will be described later with reference to the flowchart of Fig. 7.

The software configuration management data creation support apparatus 100 can create the software configuration management data for the information system for which the design information has been collected in step S100 by selectively executing the processing in step S500 or S600 as described above. After executing the processing in step S500 or step S600, the software configuration management data creation support apparatus 100 transmits the created software configuration management data to the software configuration management apparatus 200 via the network 500, and ends the processing illustrated in the flowchart of Fig. 3.

When the software configuration management data is received from the software configuration management data creation support apparatus 100, the software configuration management apparatus 200 stores the class relationship data and the instance information data included in the software configuration management data in the class relationship database 201 and the instance information database 202, respectively. As a result, the software configuration management data created in the software configuration management data creation support apparatus 100 is recorded in the software configuration management apparatus 200.

Fig. 4 is a flowchart illustrating a flow of word/phrase extraction processing from the design information executed in step S200 in Fig. 3.

In step S210, the design information is read from the design information database 173 to acquire the design information of the information system that is a creation target of the software configuration management data.

In step S220, a predetermined word/phrase is extracted from the design information read from the design information database 173 in step S210. Here, words/phrases corresponding to the functional configuration taken charge of by each information device in the information system are retrieved and extracted from various sentences and drawings acquired as the design information.

For example, a case is considered in which a sentence such as "an in-vehicle unit including a control system ECU used for controlling a vehicle drive system and an information system ECU used for an information communication function is ..., and an ECU having an information communication function as a main function includes a TCU ..." is included in a required specification of the information system read as the design information. In this case, for example, words/phrases such as "drive system", "control system ECU", "information communication function", "information system ECU", and "TCU" are extracted through the processing in step S220 as words/phrases indicating a functional configuration of an information device included in the sentence. Note that information regarding a word/phrase that is an extraction target may be set in advance in the software configuration management data creation support apparatus 100, or may be designated by the user. Alternatively, a word/phrase may be acquired from the outside, or the existing design information and the software configuration management data may be compared and analyzed, and a word/phrase that is an extraction target may be set on the basis of the result. In addition to this, an extraction target word/phrase may be set by using various methods.

In step S230, each word/phrase extracted in step S220 is written into the design information extraction result database 174. As a result, information regarding various words/phrases indicating the functional configuration of the information device extracted from the design information is written into the design information extraction result database 174.

Upon completion of the processing in step S230, the word/phrase extraction processing from the design information by the design information extraction unit 162 is ended, and the flow proceeds to step S300 in Fig. 3.

Fig. 5 is a flowchart illustrating a flow of class candidate selection processing executed in step S300 in Fig. 3.

In step S310, reading is performed on the abstract class database 171 and the concrete class database 172 to acquire attribute information of an abstract class or a concrete class recorded in these databases.

In step S320, reading is performed on the design information extraction result database 174 to acquire the information regarding each word/phrase extracted from the design information by the design information extraction unit 162.

In step S330, the attribute information of the abstract class or the concrete class acquired in step S310 is compared with each extracted word/phrase acquired in step S320, and partial matching thereof is performed. In subsequent step S340, on the basis of the partial matching result in step S330, a class partially matching the extracted word/phrase is selected as an abstract class candidate or a concrete class candidate in the software configuration management data of the information system of which the design information is collected in step S100 in Fig. 3.

Specifically, in step S330, for each class recorded in the abstract class database 171 and the concrete class database 172, it is determined whether or not partial or whole content of the class matches any extracted word/phrase. As a result, in a case where there is a class that matches the extracted word/phrase, the class is selected as an abstract class candidate or a concrete class candidate in step S340. That is, in a case where the class matching the extracted word/phrase is an abstract class, the class is selected as an abstract class candidate of the information system, and in a case where the class matching the extracted word/phrase is a concrete class, the class is selected as a concrete class candidate of the information system.

Upon completion of the processing in step S340, the class candidate selection processing in the class candidate selection unit 163 is ended, and the flow proceeds to step S400 in Fig. 3.

Fig. 6 is a flowchart illustrating a flow of software configuration management data creation processing based on depth priority executed in step S500 in Fig. 3.

In step S501, the highest abstract class candidate is displayed on the terminal apparatus 400 to present the class candidate to the user. Here, one or more abstract class candidates located in the highest tier in the tiered structure of the software configuration management data among the abstract class candidates selected in step S340 in Fig. 5 are displayed on the terminal apparatus 400 as the highest abstract class candidates.

In step S502, the highest abstract class in the software configuration management data is selected on the basis of the highest abstract class candidates displayed in step S501. Here, for example, an abstract class candidate selected by the user among one or more abstract class candidates displayed on the terminal apparatus 400 in step S501 is selected as the highest abstract class.

In step S503, a lower class candidate for the class candidate displayed immediately before is displayed on the terminal apparatus 400 to present the class candidate to the user. Here, among the abstract class candidates or the concrete class candidates selected in step S340 in Fig. 5, one or more abstract class candidates or concrete class candidates located in a tier next to the tier in which the abstract class candidate is selected in immediately preceding step S502 or step S505 in the tiered structure of the software configuration management data are displayed as lower class candidates on the terminal apparatus 400. That is, in a case where the processing in step S503 is executed first, each abstract class candidate or each concrete class candidate belonging to a tier one level lower than the highest abstract class candidate presented in immediately preceding step S501 is presented to the user as a lower class candidate. On the other hand, in a case where the processing in step S503 is executed for the second and subsequent times, each abstract class candidate or each concrete class candidate belonging to a tier one level lower than the abstract class candidate presented in the previous step S503 is presented to the user as a lower class candidate.

In step S504, it is determined whether or not the lower class candidate displayed in immediately preceding step S503 is a concrete class candidate. In a case where the lower class candidate displayed in immediately preceding step S503 is a concrete class candidate, the flow proceeds to step S506. In a case where the displayed lower class candidate is not a concrete class candidate, that is, an abstract class candidate, the flow proceeds to step S505.

In a case where the flow proceeds from step S504 to step S505, in step S505, a lower abstract class in the software configuration management data is selected on the basis of the abstract class candidate displayed as the lower class candidate in step S503. Here, for example, the abstract class candidate selected by the user among one or more abstract class candidates displayed on the terminal apparatus 400 in step S503 is selected as the lower abstract class. When the lower abstract class is selected in step S505, the flow returns to step S503, and the above-described processing is repeatedly performed.

In a case where the flow proceeds from step S504 to step S506, in step S506, a concrete class in the software configuration management data is selected on the basis of the concrete class candidates displayed as the lower class candidates in step S503. Here, for example, a concrete class candidate selected by the user from among one or more concrete class candidates displayed on the terminal apparatus 400 in step S503 is selected as a concrete class. When the concrete class is selected in step S505, the flow proceeds to step S507.

Through the processing in steps S501 to S506 described above, the management data creation unit 164 can sequentially present the plurality of class candidates from the abstract class candidates in the highest tier to the concrete class candidates to the user in an order corresponding to the tiered structure of the software configuration management data.

In step S507, instance information corresponding to the attribute information of the concrete class selected in step S506 is input. Here, for example, when the user operates the terminal apparatus 400 to input the instance information, it is possible to set the instance information for each information device in the information system for each class selected in steps S502, S505, and S506.

In step S508, it is determined whether or not there is an abstract class candidate in addition to the abstract class candidates which have been set as processing targets so far. In a case where there is another abstract class candidate, that is, in a case where there is an abstract class candidate that has not been selected as an abstract class and has not been excluded from the abstract class among the abstract class candidates selected by the class candidate selection unit 163, the flow returns to step S503 and the above-described processing is continued. On the other hand, in a case where there is no other abstract class candidate, the software configuration management data creation processing based on depth priority in the management data creation unit 164 is ended.

Fig. 7 is a flowchart illustrating a flow of software configuration management data creation processing based on width priority executed in step S600 in Fig. 3.

In step S601, the highest abstract class candidate is displayed on the terminal apparatus 400 to present the class candidate to the user. Here, similarly to step S501 in Fig. 6, one or more abstract class candidates located in the highest tier in the tiered structure of the software configuration management data among the abstract class candidates selected in step S340 in Fig. 5 are displayed on the terminal apparatus 400 as the highest abstract class candidates.

In step S602, the highest abstract class in the software configuration management data is selected on the basis of the highest abstract class candidates displayed in step S601. Here, for example, the abstract class candidate selected by the user among one or more abstract class candidates displayed on the terminal apparatus 400 in step S601 is selected as the highest abstract class.

In step S603, it is determined whether or not there is the highest abstract class candidate in addition to the highest abstract class candidates which have been set as processing targets so far. In a case where there is another highest abstract class candidate, that is, in a case where there is an abstract class candidate that has not been selected as the highest abstract class and has not been excluded from the highest abstract class among the abstract class candidates in the highest tier selected by the class candidate selection unit 163, the flow returns to step S602 and the selection of the highest abstract class is continued. On the other hand, in a case where there is no other highest abstract class candidate, the flow proceeds to step S604.

In step S604, a lower class candidate for the class candidate displayed immediately before is displayed on the terminal apparatus 400 to present the class candidate to the user. Here, similarly to step S503 in Fig. 6, one or more abstract class candidates or concrete class candidates located in a tier next to the tier in which the abstract class candidate is selected in immediately preceding step S602 or step S606 in the tiered structure of the software configuration management data among the abstract class candidates or the concrete class candidates selected in step S340 in Fig. 5 are displayed as lower class candidates on the terminal apparatus 400. That is, in a case where the processing in step S604 is executed first, each abstract class candidate or each concrete class candidate belonging to a tier one level lower than the highest abstract class candidate presented in immediately preceding step S601 is presented to the user as a lower class candidate. On the other hand, in a case where the processing in step S604 is executed for the second and subsequent times, each abstract class candidate or each concrete class candidate belonging to a tier one level lower than the abstract class candidate presented in the previous step S604 is presented to the user as a lower class candidate.

In step S605, it is determined whether or not the lower class candidate displayed in immediately preceding step S604 is a concrete class candidate. In a case where the lower class candidate displayed in immediately preceding step S604 is a concrete class candidate, the flow proceeds to step S608. In a case where the displayed lower class candidate is not a concrete class candidate, that is, an abstract class candidate, the flow proceeds to step S606.

In a case where the flow proceeds from step S605 to step S606, in step S606, a lower abstract class in the software configuration management data is selected on the basis of the abstract class candidate displayed as the lower class candidate in step S604. Here, for example, the abstract class candidate selected by the user among one or more abstract class candidates displayed on the terminal apparatus 400 in step S604 is selected as the lower abstract class.

In step S607, it is determined whether or not there is an abstract class candidate in addition to the abstract class candidates which have been set as processing targets so far. In a case where there is another abstract class candidate, that is, in a case where there is an abstract class candidate that has not been selected as an abstract class and has not been excluded from the abstract class among the abstract class candidates selected by the class candidate selection unit 163, the flow returns to step S604 and the above-described processing is continued. On the other hand, in a case where there is no other abstract class candidate, the flow proceeds to step S608.

In a case where the flow proceeds from step S605 or S607 to step S608, in step S608, a concrete class in the software configuration management data is selected on the basis of the concrete class candidates displayed as the lower class candidates in step S604. Here, for example, a concrete class candidate selected by the user from among one or more concrete class candidates displayed on the terminal apparatus 400 in step S604 is selected as a concrete class. When the concrete class is selected in step S608, the flow proceeds to step S609.

Through the processing in steps S601 to S608 described above, the management data creation unit 164 can sequentially present the plurality of class candidates from the abstract class candidates in the highest tier to the concrete class candidates to the user in an order corresponding to the tiered structure of the software configuration management data.

In step S609, instance information corresponding to the attribute information of the concrete class selected in step S608 is input. Here, for example, when the user operates the terminal apparatus 400 to input the instance information, it is possible to set the instance information for each information device in the information system for each class selected in steps S602, S606, and S608.

After the processing in step S609 is performed, the software configuration management data creation processing based on width priority in the management data creation unit 164 is ended.

Next, details of the abstract class database 171, the concrete class database 172, the design information database 173, and the design information extraction result database 174 will be described.

Fig. 8 is a diagram illustrating an example of the abstract class database 171. As illustrated in Fig. 8, the abstract class database 171 is configured, for example, by recording information indicated in respective columns of the reference numerals 1711 to 1714 for a plurality of records of abstract classes set for each functional configuration taken charge of by the information device in the information system.

In the column 1711, information of an abstract class name when a functional configuration of each information device is represented in a tiered structure is recorded. In the column 1712, attribute information corresponding to each abstract class is recorded. In the column 1713, information indicating a selection method at the time of creating the software configuration management data for a lower class of each abstract class is recorded. In the column 1714, information indicating a lower class of each abstract class is recorded.

Fig. 9 is a diagram illustrating an example of the concrete class database 172. As illustrated in Fig. 9, the concrete class database 172 is configured, for example, by recording information indicated in respective columns of the reference numerals 1721 to 1723 in a plurality of records of concrete classes set for each functional configuration taken charge of by the information device in the information system.

In the column 1721, information of a concrete class name when the functional configuration of each information device is represented in a tiered structure is recorded. In the column 1722, attribute information corresponding to each concrete class is recorded. In the column 1723, information indicating that there is no lower class in each concrete class is recorded.

Fig. 10 is a diagram illustrating an example of data of instance information stored in the instance information database 202. In the instance information database 202, instance information corresponding to each information device of the information system is recorded. Fig. 10 illustrates an example of instance information data 2021 corresponding to a telematics control unit (TCU). The instance information data 2021 represents instance information regarding software included in the TCU for each function of a concrete class to which the TCU belongs and each function of an abstract class in a higher tier than a concrete class to which the TCU belongs.

Fig. 11 is a diagram illustrating an example of class relationship data stored in the class relationship database 201. In the class relationship database 201, class relationship data representing a tiered structure of software configuration management data is recorded corresponding to each information device of the information system. Fig. 11 illustrates an example of the class relationship data 2011 corresponding to the TCU. The class relationship data 2011 represents a tiered structure of the software configuration management data of the TCU from an abstract class of the highest tier to a concrete class of the lowest tier.

Fig. 12 is a sequence diagram illustrating a flow of processing when the software configuration management data creation support apparatus 100 creates the software configuration management data by using attribute information and instance information provided from each of a final product manufacturer 1100 that produces the information system, a primary supplier (Tier1) 1101 that supplies components to the final product manufacturer 1100, and a secondary supplier (Tier2) 1102 that supplies components to the primary supplier 1101. The processing illustrated in the sequence diagram of Fig. 12 is executed, for example, when the final product manufacturer 1100 who is a user of the software configuration management system 1 transmits design information of the information system to the software configuration management data creation support apparatus 100 and transmits a required specification of a component to the primary supplier 1101 by using the terminal apparatus 400.

When the design information is transmitted from the final product manufacturer 1100, the software configuration management data creation support apparatus 100 collects the design information by using the design information collection unit 161 (step S100). The design information extraction unit 162 extracts a predetermined word/phrase from the collected design information (step S200), and the class candidate selection unit 163 selects a class candidate (step S300).

When the required specification is transmitted from the final product manufacturer 1100, the primary supplier 1101 receives the required specification by using the terminal apparatus 400. The required specification of a component is transmitted to the secondary supplier 1102.

When the required specification is transmitted from the primary supplier 1101, the secondary supplier 1102 receives the required specification by using the terminal apparatus 400. Attribute information and instance information of a component supplied by the secondary supplier 1102 are prepared and transmitted to the primary supplier 1101.

When the attribute information and the instance information are transmitted from the secondary supplier 1102, the primary supplier 1101 receives the attribute information and the instance information by using the terminal apparatus 400. Attribute information and instance information of a component supplied by the primary supplier 1101 are prepared including the received attribute information and instance information, and are transmitted to the final product manufacturer 1100.

When the attribute information and the instance information are transmitted from the primary supplier 1101, the final product manufacturer 1100 receives the attribute information and the instance information by using the terminal apparatus 400. Attribute information and instance information of each component of the information system that is a final product are prepared including the received attribute information and instance information, and are transmitted to the software configuration management data creation support apparatus 100.

When the attribute information and the instance information are transmitted from the final product manufacturer 1100, the software configuration management data creation support apparatus 100 causes the management data creation unit 164 to create depth-priority software configuration management data (step S500) or width-priority software configuration management data (step S600) on the basis of these pieces of information. As a result, the class relationship data and the instance information data regarding each component of the information system are created to generate the software configuration management data.

In the sequence diagram described above, there is a case where the final product manufacturer 1100 cannot obtain the attribute information and the instance information of the supplied component from the primary supplier 1101 and the secondary supplier 1102. In such a case, the final product manufacturer 1100 has to prepare the attribute information and the instance information of each component of the information system at its own responsibility, which increases a work load. Therefore, it is preferable that the final product manufacturer 1100 sufficiently asks the primary supplier 1101 and the secondary supplier 1102 for the provision of the attribute information and the instance information.

Next, details of the influence range estimation apparatus 300 will be described. Fig. 13 is a functional block diagram of the influence range estimation apparatus 300. Note that Fig. 13 also illustrates a functional block diagram of the software configuration management apparatus 200, which is the same as that illustrated in Fig. 2. Fig. 14 is a diagram illustrating a configuration example of a computer configuring the influence range estimation apparatus 300 of the present embodiment.

The influence range estimation apparatus 300 is coupled to the software configuration management apparatus 200 and the terminal apparatus 400 via the network 500. Note that the number of terminal apparatuses 400 may be two or more.

The terminal apparatus 400 transmits cyber security information in which a security risk of a resource for realizing any function is written to the influence range estimation apparatus 300. Here, the resource is a concept including software and hardware. The cyber security information is information including text. The influence range estimation apparatus 300 specifies a module and a component influenced by the security risk of the resource, and outputs the module and the component to the terminal apparatus 400 as influence range information.

The terminal apparatus 400 is a terminal operated by a manufacturer who manufactures a product, a vendor who sells a product, and the like, and is, for example, a general-purpose computer or a smartphone.

The influence range estimation apparatus 300 determines an influence range of a product with respect to the security risk. Here, the influence range of a product indicates a component group influenced by the security risk among components (elements) configuring the product. The influence range estimation apparatus 300 is realized by using, for example, a computer having a configuration as illustrated in Fig. 14. Note that the number of computers configuring the influence range estimation apparatus 300 may be one or two or more.

The influence range estimation apparatus 300 includes a processor 301, a main storage device 302, a subsidiary storage device 303, and a network interface 304. The hardware elements are coupled to each other via an internal bus 305.

The processor 301 executes a program stored in the main storage device 302. The processor 301 executes processing according to the program to operate as a functional unit (module) that realizes a specific function. In the following description, when processing is described by using a functional unit as a subject, this indicates that the processor 301 executes a program for realizing the functional unit.

The main storage device 302 is a dynamic random access memory (DRAM), and stores a program executed by the processor 301 and data used by the program. The main storage device 302 is also used as a work area.

The subsidiary storage device 303 is an HDD, an SSD, or the like, and permanently stores data. The program and the data stored in the main storage device 302 may be stored in the subsidiary storage device 303. In this case, the processor 301 reads the program and information from the subsidiary storage device 303 and loads the program and information into the main storage device 302.

The network interface 304 is an interface for coupling to an external apparatus via a network.

Note that the hardware configuration of the influence range estimation apparatus 300 is an example and is not limited thereto. Input apparatuses such as a keyboard, a mouse, and a touch panel may be included, and output apparatuses such as a display and a printer may be included.

As illustrated in Fig. 13, for example, the influence range estimation apparatus 300 includes an information acquisition unit 310, an information extraction unit 311, and an influence range estimation unit 312 as functional units.

The information acquisition unit 310 acquires the cyber security information. The information extraction unit 311 extracts information regarding a resource corresponding to a security risk target from the cyber security information. For example, the name of software having the vulnerability and the content of the vulnerability are extracted. In addition, the information extraction unit 311 generates a search key from the extracted information and outputs the search key to the influence range estimation unit 312. The influence range estimation unit 312 estimates an influence range of the product on the basis of the search key, and outputs the estimation result as influence range information. The influence range estimation unit 312 includes a function determination unit 320 and a search unit 321.

Note that, for each functional unit included in the influence range estimation apparatus 300, a plurality of functional units may be integrated into one functional unit, or one functional unit may be divided into a plurality of functional units for each function.

Fig. 15 is a diagram illustrating an example of the influence range information.

The influence range information includes, for example, a table 800 as illustrated in Fig. 15. The table 800 stores entries including a module name 801 and an influence range 802.

The module name 801 is a field for storing a name (identification information) of a module including a component influenced by a security risk. The influence range 802 is a field for storing a name (identification information) of a component influenced by the security risk.

Figs. 16A and 16B are sequence diagrams for describing an example of a flow of processing of the influence range estimation apparatus 300 according to the present embodiment.

In the present embodiment, a use case in which a vendor and a product manufacturer use the influence range estimation apparatus 300 will be described as an example.

First, a use case illustrated in Fig. 16A will be described. A vendor collects cyber security information from a web or the like, and operates a terminal apparatus 400-1 to transmit the cyber security information to the influence range estimation apparatus 300 (step S1101).

When receiving the cyber security information, the influence range estimation apparatus 300 executes influence range estimation processing (step S1102). The influence range estimation apparatus 300 transmits influence range information as a processing result to the terminal apparatus 400-1 operated by the vendor (step S1103). Note that the influence range estimation processing is executed for each product handled by the vendor.

The vendor operates the terminal apparatus 400-1 to generate a report by using the influence range information (step S1104), and transmits the report to a terminal apparatus 400-2 operated by the product manufacturer (step S1105). Note that the terminal apparatus 400-1 need not be used to generate the report.

A use case illustrated in Fig. 16B will be described. The product manufacturer collects cyber security information from the web or the like, operates a terminal apparatus 400-2 to transmit the cyber security information to the influence range estimation apparatus 300 (step S1201).

When receiving the cyber security information, the influence range estimation apparatus 300 executes influence range estimation processing (step S1202). The influence range estimation apparatus 300 transmits influence range information to the terminal apparatus 400-2 operated by the product manufacturer as a processing result (step S1203). Note that the influence range estimation processing is executed on all the products.

Fig. 17 is a flowchart illustrating an example of the influence range estimation processing executed by the influence range estimation apparatus 300. Here, it is assumed that there is one target product.

The information extraction unit 111 acquires cyber security information received by the information acquisition unit 310 (step S1401).

The information extraction unit 311 extracts information regarding a security risk from the cyber security information, and extracts a search key from the extracted information (step S1402). In the present embodiment, it is assumed that a search key indicating a resource is extracted from the cyber security information. Note that a known method may be used as a method of extracting a term from a document, and thus a detailed description thereof will be omitted.

The function determination unit 320 of the influence range estimation unit 312 determines whether or not there is a resource (influenced resource) influenced by the security risk on the basis of the search key (step S1403).

Specifically, the function determination unit 320 refers to the instance information database 202 stored in the software configuration management apparatus 200 and retrieves instance information including information matching the search key. In a case where there is instance information including information that matches the search key, the function determination unit 320 determines that there is an influenced resource.

In a case where it is determined that there is no influenced resource, the influence range estimation unit 312 transmits error information to the terminal apparatus 400 (step S1404), and ends the influence range estimation processing. For example, it is conceivable to transmit error information indicating that there is no corresponding resource or error information for prompting checking of a component or the like related to a resource.

In a case where it is determined that there is an influenced resource, the function determination unit 320 of the influence range estimation unit 312 sets a reference module and a target function (step S1405).

Specifically, the function determination unit 320 sets a function corresponding to retrieved instance information as the target function. In addition, the function determination unit 320 refers to the class relationship database 201 stored in the software configuration management apparatus 200, retrieves an abstract class corresponding to a higher tier than a concrete class corresponding to retrieved instance information, and determines a module corresponding to the retrieved abstract class as the reference module.

The search unit 321 of the influence range estimation unit 312 determines whether or not the reference module has the target function (step S1406).

Specifically, the search unit 321 refers to the class relationship database 201 and acquires functions of the reference module. As a result, the functions of the reference module can be ascertained. The search unit 321 determines whether or not the target function is included in the functions of the reference module. In a case where the target function is included in the functions of the reference module, the search unit 321 determines that the reference module has the target function.

In a case where it is determined that the reference module does not have the target function, the search unit 321 of the influence range estimation unit 312 updates the reference module (step S1407) and returns to step S1406.

Specifically, the search unit 321 refers to the class relationship database 201 and retrieves an abstract class corresponding to a higher tier than an abstract class corresponding to the reference module. The function determination unit 320 sets a module corresponding to the retrieved abstract class as a new reference module.

The processing in steps S1406 and S1407 corresponds to processing of retrieving an inheritance relationship of a tree structure from a lower layer to a higher layer starting from a module having an inheritance relationship with a component having a function realized by an influenced resource.

In a case where it is determined that the reference module has the target function, the search unit 321 of the influence range estimation unit 312 specifies a component by referring to the class relationship database 201 on the basis of the reference module (step S1408).

Specifically, the search unit 321 retrieves the inheritance relationship of the tree structure from the higher layer to the lower layer starting from the reference module, thereby specifying the component.

The influence range estimation unit 312 generates influence range information on the basis of the specified component (step S1409), and ends the influence range estimation processing.

Fig. 18 is a diagram illustrating an example of a screen displayed on the terminal apparatus 400 on the basis of the influence range information transmitted from the influence range estimation apparatus 300.

A screen 1000 as illustrated in Fig. 18 is displayed on the terminal apparatus 400. The screen 1000 includes a cyber security information field 1010, an influence range field 1020, and a resource information field 1030.

The cyber security information field 1010 is a field for selecting cyber security information and giving an instruction to execute the influence range estimation processing, and includes an input field 1011 and an execution button 1012. The input field 1011 is a field for inputting cyber security information. For example, a file or text is input to the input field 1011. The execution button 1012 is an operation button for giving an instruction to execute the influence range estimation processing.

The influence range field 1020 is a field for displaying a result of the influence range estimation processing, such as influence range information. In Fig. 18, a tree structure on which influence ranges of products are superimposed is displayed. A hatched box represents a component having an influenced resource, and a hatched area indicates a search range starting from a module having a target function. The search result in step S1403 is superimposed and displayed in the box corresponding to the component having the influenced resource.

The resource information field 1030 is a field for a user who has referred to the influence range field 1020 to register new resource information, and includes an addition table 1031, an addition button 1032, and a registration button 1033. The addition table 1031 is a table for setting information to be registered as resource information. The addition button 1032 is an operation button for adding an entry to the addition table 1031. The registration button 1033 is an operation button for registering the content of the addition table 1031.

A user such as a vendor can add and update resource information by referring to the influence range information and the like. When the resource information is added or updated, the result is reflected in the class relationship database 201 or the instance information database 202. As a result, it is possible to increase accuracy of estimating an influence range of a product and speed up the estimation processing.

(Conclusion) In the related art, in order to specify a component influenced by a security risk of a resource, it is necessary to completely ascertain a relationship between the resource and the component. On the other hand, in the present invention, if a relationship between a resource and a component can be partially ascertained, the component influenced by the security risk of the resource can be specified.

According to the embodiment of the present invention described above, the following operational effects can be obtained.
(1) The software configuration management data stored in the software configuration management apparatus 200 has a data structure for managing a software configuration of an information system including a plurality of information devices. This data structure is stored in the class relationship database 201 and includes class relationship data in which functional configurations taken charge of by the information devices in the information system are represented in a tiered structure including a concrete class of a lowest tier and abstract classes of one or a plurality of higher tiers. With this configuration, it is possible to obtain a data structure capable of reliably managing a software configuration of an information system configured by combining one or more pieces of software and/or one or more information devices.
(2) The data structure described above further includes instance information data that is stored in the instance information database 202 and represents instance information regarding software included in the information device. The instance information data includes instance information regarding software included in the information device for each functional configuration of a concrete class to which the information device belongs and each functional configuration of an abstract class in a higher tier than the concrete class to which the information device belongs. With this configuration, details of software of each information device included in the information system can be represented by the instance information.
(3) The software configuration management data creation support apparatus 100 is an apparatus that supports creation of software configuration management data for managing a software configuration of an information system including a plurality of information devices. The software configuration management data creation support apparatus 100 includes the design information collection unit 161 that collects design information of the information system, the design information extraction unit 162 that extracts a predetermined word/phrase from the design information, the class candidate selection unit 163, and the management data creation unit 164. The class candidate selection unit 163 compares the word/phrase extracted by the design information extraction unit 162 with attribute information set in advance according to a functional configuration of the information system, and selects a class candidate corresponding to a concrete class or an abstract class in a case where functional configurations taken charge of by the information devices in the information system are represented in a tiered structure including a concrete class of a lowest tier and abstract classes of one or a plurality of higher tiers on the basis of a comparison result. The management data creation unit 164 presents the class candidate to a user, and creates the software configuration management data on the basis of the user's operation of selecting the class candidate. With this configuration, for the information system configured by combining one or more pieces of software and/or one or more information devices, it is possible to appropriately support the user to create the software configuration management data for reliably managing the software configuration.
(4) The class candidate selection unit 163 selects a concrete class candidate corresponding to a concrete class and an abstract class candidate corresponding to an abstract class as class candidates (step S340). The management data creation unit 164 sequentially presents a plurality of class candidates from an abstract class candidate in the highest tier to a concrete class candidate to the user in an order corresponding to the tiered structure (steps S501 to S506, and steps S601 to S608). With this configuration, it is possible to appropriately support the user to create the software configuration management data in which the functional configurations taken charge of by the information devices in the information system are represented in the tiered structure including the concrete class of the lowest tier and the abstract classes of one or a plurality of higher tiers.
(5) The management data creation unit 164 can selectively execute either depth-priority processing (step S500) of sequentially presenting a plurality of class candidates to the user with priority given to the depth of the tiered structure or width-priority processing (step S600) of sequentially presenting a plurality of class candidates to the user with priority given to the spread of the tiered structure. With this configuration, it is possible to present a class candidate to the user at the time of creating the software configuration management data by using an appropriate method according to situations.
(6) When the user performs an operation of selecting a concrete class candidate (steps S506 and S608), the management data creation unit 164 causes the user to input instance information regarding the software included in the information device (steps S507 and S609), and creates the software configuration management data including the instance information. With this configuration, it is possible to cause the user to execute the input of the instance information necessary for creating the software configuration management data at an appropriate timing.
(7) For example, as illustrated in Fig. 12, the management data creation unit 164 can acquire instance information regarding software included in the information device from the information device, a host apparatus including the information device, or a manufacturer of the information system, and create the software configuration management data including the instance information. With this configuration, it is possible to easily and reliably acquire the instance information necessary for creating the software configuration management data.

It is needless to say that the present invention is not limited to the above embodiment, and various modifications can be made without departing from the concept thereof. For example, the above embodiment has been described in detail for easy understanding of the present invention, and is not necessarily limited to those having all the described configurations. In addition, it is possible to add, delete, or replace other configurations for some of the configurations of the above embodiment.

In addition, some or all of the above-described configurations, functional units, processing units, processing means, and the like may be designed with an integrated circuit to be realized by hardware, for example. In addition, each of the above-described configurations, functions, and the like may be realized by software by a processor interpreting and executing a program for realizing each function. Information such as a program, a table, and a file for realizing each function may be stored in a recording apparatus such as a memory, a hard disk, or an SSD, or a recording medium such as an IC card, an SD card, or a DVD.

In each of the above drawings, control lines and information lines considered to be necessary for description are illustrated, and not all the control lines and information lines on implementation are necessarily illustrated. For example, it may be considered that almost all the configurations are actually coupled to each other.

Further, the disposition form of the various functional units, the various processing units, and the various databases described above is merely an example. The disposition form of the various functional units, the various processing units, and the various databases can be changed to an optimal disposition form from the viewpoint of performance, processing efficiency, communication efficiency, and the like of hardware and software included in apparatuses.

### [Reference Signs List]

- 1: Software configuration management system
- 100: Software configuration management data creation support apparatus
- 110: Control unit
- 120: Memory unit
- 130: Input unit
- 140: Output unit
- 150: Communication unit
- 160: Program storage unit
- 161: Design information collection unit
- 162: Design information extraction unit
- 163: Class candidate selection unit
- 164: Management data creation unit
- 170: Data storage unit
- 171: Abstract class database
- 172: Concrete class database
- 173: Design information database
- 174: Design information extraction result database
- 200: Software configuration management apparatus
- 201: Class relationship database
- 202: Instance information database
- 300: Influence range estimation apparatus
- 310: Information acquisition unit
- 311: Information extraction unit
- 312: Influence range estimation unit
- 320: Function determination unit
- 321: Search unit
- 400: Terminal apparatus
- 500: Network

## Claims

1. A software configuration management data structure for managing a software configuration of an information system including a plurality of information devices, the software configuration management data structure comprising
class relationship data in which functional configurations taken charge of by the respective information devices in the information system are represented in a tiered structure including a concrete class of a lowest tier and abstract classes of one or a plurality of higher tiers.

2. The software configuration management data structure according to claim 1, further comprising
instance information data representing instance information regarding software included in the information device.

3. The software configuration management data structure according to claim 2, wherein
the instance information data includes the instance information for each functional configuration of the concrete class to which the information device belongs and each functional configuration of the abstract class in a higher tier than the concrete class to which the information device belongs.

4. A software configuration management data creation support apparatus that supports creation of software configuration management data for managing a software configuration of an information system including a plurality of information devices, the software configuration management data creation support apparatus comprising:
a design information collection unit that collects design information of the information system;
a design information extraction unit that extracts a predetermined word/phrase from the design information;
a class candidate selection unit that compares the word/phrase extracted by the design information extraction unit with attribute information set in advance according to a functional configuration of the information system, and selects, on the basis of a result of the comparison, a class candidate corresponding to a concrete class or an abstract class in a case where functional configurations taken charge of by the information devices in the information system are represented in a tiered structure including a concrete class of a lowest tier and abstract classes of one or a plurality of higher tiers; and
a management data creation unit that presents the class candidate to a user and creates the software configuration management data on the basis of the user's operation of selecting the class candidate.

5. The software configuration management data creation support apparatus according to claim 4, wherein
the class candidate selection unit selects a concrete class candidate corresponding to the concrete class and an abstract class candidate corresponding to the abstract class as the class candidates, and
the management data creation unit sequentially presents a plurality of the class candidates from the abstract class candidate in a highest tier to the concrete class candidate to the user in an order corresponding to the tiered structure.

6. The software configuration management data creation support apparatus according to claim 5, wherein
the management data creation unit is capable of selectively executing one of depth-priority processing of sequentially presenting the plurality of class candidates to the user with priority given to a depth of the tiered structure and width-priority processing of sequentially presenting the plurality of class candidates to the user with priority given to a spread of the tiered structure.

7. The software configuration management data creation support apparatus according to claim 5, wherein
the management data creation unit causes the user to input instance information regarding software included in the information devices and creates the software configuration management data including the instance information when the user's operation of selecting the concrete class candidate is performed.

8. The software configuration management data creation support apparatus according to claim 5, wherein
the management data creation unit acquires instance information regarding software included in the information devices from the information devices, a host apparatus including the information devices, or a manufacturer of the information system, and creates the software configuration management data including the instance information.

9. A software configuration management data creation support method of supporting creation of software configuration management data for managing a software configuration of an information system including a plurality of information devices, the software configuration management data creation support method comprising:
collecting design information of the information system;
extracting a predetermined word/phrase from the collected design information;
comparing the extracted word/phrase with attribute information set in advance according to a functional configuration of the information system;
selecting, on the basis of a result of the comparison, a class candidate corresponding to a concrete class or an abstract class in a case where functional configurations taken charge of by the information devices in the information system are represented in a tiered structure including a concrete class of a lowest tier and abstract classes of one or a plurality of higher tiers;
presenting the selected class candidate to a user; and
creating the software configuration management data on the basis of the user's operation of selecting the presented class candidate.
